# EUROPÄISCHE PATENTSCHRIFT

(11) **EP 0 555 821 B1**
(45) Veröffentlichungstag und Bekanntmachung des Hinweises auf die Patenterteilung: **02.06.1999**
(21) Anmeldenummer: 93102044.0
(22) Anmeldetag: 10.02.1993
(51) Int. Cl.: B07C 5/344, B07C 5/36

(54) **Vorrichtung zum Ausscheiden von Metallteilchen**
Device for separating small metal particles
Dispositif de séparation de particules métalliques

(30) Priorität: 12.02.1992 DE 9201767 U; 14.02.1992 DE 9201851 U; 07.03.1992 DE 4207348
(43) Veröffentlichungstag der Anmeldung: 18.08.1993
(73) Patentinhaber: Pulsotronic Merten GmbH & Co. KG, 51643 Gummersbach (DE)
(72) Erfinder: Kind, Guntram, W-5270 Gummersbach (DE)
(74) Vertreter: Selting, Günther, Dipl.-Ing.

(56) Entgegenhaltungen:
- EP-A- 0 202 356
- EP-A- 0 353 457
- DE-A- 3 929 709
- DE-A- 4 017 274
- DE-B- 2 456 680
- DE-C- 929 046
- US-A- 4 480 753

## Beschreibung

Die Erfindung bezieht sich auf eine Vorrichtung zum Ausscheiden von Metallteilchen aus einem Fördergutstrom, der aus pulverförmigem, körnigem oder stückigem Fördergut besteht.

Durch die DE-PS 18 09 982 ist eine durch einen Metalldetektor betätigte Sortierweiche für Kunststoff, insbesondere Mahlgut, mit einem schwenkbar gelagerten Leitkörper und einem Betätigungsorgan bekannt geworden, bei dem der kanalartig geschlossene Leitkörper, insbesondere Rohrabschnitt, an seinem dem Metalldetektor benachbarten Ende in einem den Metalldetektor aufnehmenden Gehäuse aufgehängt ist und gesteuert durch den Metalldetektor abwechselnd über je einer hosenbeinartigen Öffnung des Gehäuses gehalten wird. Die bekannte Vorrichtung eignet sich zum Ausscheiden von Metallteilchen, bei der das Fördergut die Weiche im freien Fall passiert.

Die Vorrichtung hat sich in der Praxis bewährt; sie ist jedoch aufgrund ihrer Bauweise nicht in ein pneumatisches Druck- oder Saugfördersystem einsetzbar, bei dem sehr hohe Fördergeschwindigkeit, diskontinuierliche Förderweise und Förderstillstand auftreten können. Die Vorrichtung kann ferner nicht unmittelbar an den Materialstutzen einer Verarbeitungsmaschine wie Preß- oder Spritzgießmaschine angeschlossen werden, weil bei einem Rückstau von Fördergut die Weiche funktionsunfähig wird (verstopft).

Durch die DE-PS 33 05 268 ist dieser Nachteil vermieden worden. Die Vorrichtung ist speziell für den Anbau an den Einfüllstutzen einer Preß- oder Spritzgießmaschine ausgebildet worden und sortiert das Fördergut "portionsweise" entweder in eine Gutseite oder, wenn

Metallteilchen darin enthalten sind, in die Schlechtseite der Vorrichtung. Die Vorrichtung arbeitet hervorragend bei niedrigen Fördergeschwindigkeiten. Sie weist ein starr mit dem Ausscheideorgan gekuppeltes Absperrorgan auf, das als Schieber ausgebildet ist. Das Absperrorgan soll einen Rückstau des Fördergutes bis in den Metalldetektor verhindern. Die bekannte Vorrichtung eignet sich jedoch nicht für einen solchen Anwendungsfall, bei dem das Fördergut die Vorrichtung im freien Fall passiert.

Die DE-OS 39 29 709 weist im Gegensatz zur DE-PS 33 05 268 ein unabhängig vom Ausscheideorgan und als separate Baueinheit ausgebildetes Absperrorgan, in diesem Fall ein Quetschventil, auf, das in Abhängigkeit vom Füllstand des Ausscheideorgans geöffnet oder geschlossen wird, so daß in der Füllphase das Fördergut den Metalldetektor im freien Fall passieren kann. Mit dieser Vorrichtung können Metallteilchen mit sehr großer Sicherheit ausgeschieden werden.

In diesem Zusammenhang wird noch auf folgende Patente oder Patentanmeldungen hingewiesen, die sich auf Vorrichtungen zum Ausscheiden von Metallteilchen beziehen und die mit einer Weiche, einem Metalldetektor und ggf. einem Absperrorgan arbeiten: DE-PS 9 29 046, 24 56 680, 29 44 192, 31 50 503, 39 31 579, DE-OS 38 23 356, 40 17 274, EP-PS 202 356, 266 309, US-PS 20 45 769, 24 44 751.

Der Oberbegriff des Patentanspruchs 1 geht aus von einer Vorrichtung wie sie aus DE-A-40 17 274 bekannt ist. Diese Vorrichtung dient zum Erkennen und Ausscheiden von Metallteilchen aus einem Fördergutstrom und weist eine Weiche und einen Metalldetektor auf. Das Weichengehäuse ist an das Detektorgehäuse angeflanscht. Obwohl beide Gehäuse durch eine Flanschverbindung miteinander verbunden sind, bilden sie in der Gesamtvorrichtung eine feste Einheit, bei der unterschiedliche Gestaltungsmöglichkeiten nicht vorgesehen sind.

Der Erfindung liegt die Aufgabe zugrunde, eine Vorrichtung zum Ausscheiden von Metallteilchen zu schaffen, die leicht an unterschiedliche Anwendungsfälle angepaßt werden kann.

Die Lösung dieser Aufgabe erfolgt erfindungsgemäß mit den Merkmalen des Patentanspruchs 1.

Nach der Erfindung sind die Bauelemente Weiche, Metalldetektor und ggf. Absperrorgan baulich voneinander getrennt und zu Modulen standardisiert, so daß immer mit den gleichen Standard-Baueinheiten Weiche, Metalldetektor und ggf. Absperrorgan wahlweise Vorrichtungen für unterschiedliche Anwendungsfälle oder Einsatzbedingungen auf einfache Weise zusammengesetzt werden können. Dabei sind unterschiedliche Anwendungsfälle und Einsatzbedingungen beispielsweise wie folgt zu definieren: Förderung des Fördergutes im freien Fall, in einem Saug- oder Druckfördersystem, bei hohen bis niedrigen Fördergeschwindigkeiten, bei Förderstillstand oder diskontinuierlicher Förderung; Vorrichtungen mit hoher Aussortierrate auch bei geringen Fördergeschwindigkeiten; Vorrichtungen zur Montage direkt auf dem Materialstutzen einer Verarbeitungsmaschine wie Preß- oder Spritzgießmaschine.

Die Erfindung geht von der Erkenntnis aus, daß zur Abdeckung aller Anwendungsfälle die drei Grundelemente, nämlich Weiche, Metalldetektor und Absperrorgan bisher in Kombination stets nur für einen speziellen Anwendungsfall ausgebildet sind. Das erfordert im Hinblick auf Entwicklung und Konstruktion, Materialwirtschaft, Produktion und Lagerhaltung einen erheblichen Aufwand. Daraus ist dann erfindungsgemäß abgeleitet worden, daß mit mindestens zwei Grundbausteinen in Modulbauweise für jeden Anwendungsfall die passende Vorrichtung zusammengesetzt werden kann, die sich letztlich nur in der Reihenfolge des Zusammenbaus und ggf. der Anzahl der Module voneinander unterscheiden. Es sind dann nur noch entsprechende Maßnahmen schaltungstechnischer Art für das Funktionieren und Zusammenwirken der Module vorzusehen, die in Form standardisierter elektrischer, elektronischer, pneumatischer oder hydraulischer Schalt-, Steuer- und Stellorgane auszubilden sind.

Für einen ersten und einfachen Anwendungsfall, nämlich das Ausscheiden von Metallteilchen aus einem Fördergutstrom, der die Vorrichtung im freien Fall passieren soll (drucklos), genügt eine Vorrichtung, die aus dem Weichenmodul und dem Metalldetektormodul zusammengesetzt ist. In diesem einfachsten Fall ist an der Eingangsöffnung des Metalldetektormoduls ein Einfülltrichter montiert, in den das zu untersuchende Gut hineingeschüttet wird und unten aus der Vorrichtung wieder herauskommt, wobei der Metalldetektor das Passieren eines Metallteils erkennt und den Betätigungsmechanismus für das Weichenmodul ansteuert, der das Ausscheideorgan wie Schieber, Küken oder Klappe betätigt und das Fördergut solange durch die als Schlechtseite bezeichnete Ausgangsöffnung leitet, bis das Metallteil ausgeschieden ist.

Dadurch, daß die Anschlußverbindungen an den Eingängen und Ausgängen der einzelnen Module einheitlich zueinander passen, können die Module in wählbarer Reihenfolge entweder unmittelbar oder über Zwischenstücke miteinander verbunden werden. Die Anschlußverbindungen der Eingänge und Ausgänge müssen nicht einander gleich sein, sondern sie können auch komplementär zueinander gestaltet sein. Vorzugsweise sind diese Anschlußverbindungen jedoch einander gleich, beispielsweise als Flansche, ausgebildet, wobei die Flanschlöcher so angeordnet sind, daß zwei gegeneinandergesetzte Flansche miteinander verbunden werden können. Da die Anschlußverbindungen zueinander passen, kann ein Metalldetektormodul an jedem seiner Anschlüsse unmittelbar mit einem Weichenmodul verbunden werden. Andererseits können an wählbare Anschlüsse des Weichenmoduls Metalldetektormodule angesetzt werden. Vorzugsweise ist ein selbständiges Absperrmodul vorhanden, das ebenfalls an beliebige Anschlüsse von Weichenmodul und/oder Metalldetektormodul angeschlossen werden kann.

Vorteilhaft ist das Weichenmodul mit einer Umlenkklappe ausgestattet, die aufgrund ihrer geringen Masse eine sehr hohe Betätigungsgeschwindigkeit ermöglicht. Die Welle der Umlenkklappe kann einseitig an der dem Betätigungsmechanismus zugewandten Gehäuseseite des Weichenmoduls gelagert sein und mit einem freien Ende in das Gehäuse hineinragen, an dem die Umlenkklappe befestigt ist.

Das Gehäuse des Weichenmoduls kann ferner staubdicht ausgebildet sein, wobei im Bereich von gegenüberliegenden Wandungen der Eingangsöffnung des Weichenmoduls in das Gehäuse hineinhängende gummielastische Schürzen angeordnet sind, die in den Endlagen der Umlenkklappe mit dem freien Ende der Umlenkklappe zusammenwirken, d.h. dichtend anliegen. Die Schürzen sind vorteilhaft im Abstand von den Seitenwandungen des Gehäuses angeordnet und bestehen aus Weichgummi, Naturkautschuk oder einem weichelastischen Kunststoff, beispielsweise Nitril-Butadien-Rubber (NBR), so daß eingeklemmte Materialteilchen in die weiche Schürze hineingedrückt werden und keinen nennenswerten Spalt zwischen Schürze und Umlenkklappe erzeugen.

Für einen weiteren Anwendungsfall, nämlich der Integration der Vorrichtung in ein Fördergutsystem, z.B. Saug- oder Druckfördersystem, oder bei direkter Montage der Vorrichtung auf den Einfüllstutzen einer Verarbeitungsmaschine wie Preß- oder Spritzgießmaschine, kann es bei unregelmäßiger Verarbeitungsgeschwindigkeit der Maschine zu einem Materialrückstau oder Förderstillstand kommen. Es empfiehlt sich, für diesen Anwendungsfall eine Kombination gemäß Anspruch 3 zu wählen. Mit dieser Vorrichtung kann in Abhängigkeit von der Materialentnahme aus dem Maschinenstutzen der Materialstrom mit dem Absperrmodul unterbrochen werden, so daß ein Rückstau bis in das Weichenmodul verhindert wird. Für diesen Zweck kann an einer Ausgangsöffnung, und zwar an der Gutseite des Weichenmoduls, ein Auffang-Behälter vorgesehen werden. Mit der anderen Seite kann der Auffang-Behälter an ein Fördersystem (Saug- oder Druckfördersystem) oder direkt an den Einfüllstutzen einer Verarbeitungsmaschine angeschlossen werden. An dem Auffang-Behälter ist vorzugsweise ein Fühler angeordnet, der über eine Leitung mit der Schaltungsanordnung im Metalldetektormodul verbunden ist. Mit der genannten Schaltungsanordnung werden die vom Metalldetektor und dem Fühler am Auffang-Behälter erzeugten Ausgangssignale verarbeitet und das Absperrorgan und der Betätigungsmechanismus des Weichenmoduls angesteuert. Erreicht der Füllstand im Auffang-Behälter die Fühlermarke, steuert der Fühler das Absperrorgan an, das den Förderstrom solange unterbricht, bis das Niveau im Auffang-Behälter abgefallen ist.

Anspruch 4 in Verbindung mit Anspruch 2 ermöglicht eine Unterbrechung des Förderstroms unmittelbar vor dem Weichenmodul, so daß ein Umschalten der Umlenkklappe nicht unter Last erfolgt.

Anspruch 4 in Verbindung mit Anspruch 3 ermöglicht eine "portionsweise" Untersuchung des Förderguts bei entsprechender Steuerung der Absperrmodule. Hierbei ist bei entsprechender Steuerung der Absperrmodule folgender Betätigungsrhythmus denkbar. Es ist davon auszugehen, daß zunächst beide Absperrmodule geschlossen sind und sich kein Fördergut zwischen den Absperrmodulen befindet. Dann ist in einem weiteren Schritt das erste, in Förderrichtung vor dem Metalldetektormodul angeordnete, Absperrmodul solange zu öffnen, bis das sich stauende Fördergut den Metalldetektor noch nicht oder gerade erreicht hat. In diesem Augenblick wird das erste Absperrmodul wieder geschlossen. Das Fördergut zwischen den beiden Absperrmodulen enthält entweder kein Metallteilchen oder es enthält Metallteilchen. Entsprechend kann die Umlenkklappe des Weichenmoduls eingestellt und anschließend das zweite Absperrmodul geöffnet werden. Wenn das zwischen den Absperrmodulen gespeicherte Fördergut die Weiche verlassen hat, wird das zweite Absperrmodul wieder geschlossen und der Vorgang wiederholt sich von vorne. Diese Anordnung erlaubt eine sehr zuverlässige Untersuchung des Fördergutes, da die untersuchte Menge Fördergut den Metalldetektor stets im freien Fall passiert. Vorteilhaft ist zwischen dem Absperrmodul und dem Metalldetektormodul ein Sammel-Stutzen mit einem Fühler angeordnet, der das Öffnen und Schließen des Absperrmoduls in Abhängigkeit vom Füllstand im Sammel-Stutzen über die Schaltungsanordnung steuert.

Neben den beschriebenen Weiterbildungen der Erfindung gibt es noch andere Möglichkeiten, um mit den genannten Modulen weitere Verbesserungen und Anwendungen zu erreichen. So kann beispielsweise an die Schlechtseite des Weichenmoduls ein weiteres Metalldetektormodul angeordnet werden, mit dem festgestellt wird, ob ein durch das erste Metalldetektormodul erkanntes Metallteil die Vorrichtung auch wirklich verlassen hat; wenn nicht, kann eine Fehlermeldung abgegeben werden. Es ist ohne weiteres denkbar, mehrere Metalldetektormodule in Reihe zu schalten, die unterschiedlich wirkende Metalldetektoren enthalten, beispielsweise ein Metalldetektormodul mit einem induktiv wirkenden Metalldetektor, der Metallteilchen erkennt, und ein Metalldetektormodul mit einem kapazitiv wirkenden Detektor, der nichtmetallische Verunreinigungen erkennt.

Ferner können zwei gleichwirkende Metalldetektormodule hintereinandergeschaltet werden, um die Geschwindigkeit eines Metallteils zu messen und dadurch eine optimale Ansteuerung des Weichenmoduls zu erreichen, damit beim Ausscheiden des Metallteils möglichst wenig Fördergut mit ausgeschieden wird.

Die Erfindung kann für einen anderen Zweck als zur Ausscheidung von Metallteilchen verwendet werden, nämlich zum Verteilen von Fördergut. So kann beispielsweise von einem Silo aus eine Steuermarke in den Förderstrom gegeben werden, die beim Passieren des Metalldetektormoduls den Förderstrom umleitet, wobei dann nicht mehr zwischen Gutseite und Schlechtseite der Vorrichtung unterschieden wird.

Nachfolgend sind anhand der Zeichnungen mehrere Ausführungen der Erfindung beschrieben. Es zeigen:
- Fig. 1: eine Gesamtansicht des Weichenmoduls, mit einer Umlenkklappe,
- Fig. 2: einen Teilschnitt durch das Weichenmodul im Bereich der Umlenkklappe,
- Fig. 3: eine Gesamtansicht des Weichenmoduls von der in Fig. 1 dargestellten gegenüberliegenden Seite,
- Fig. 4: einen Querschnitt durch das Metalldetektormodul,
- Fig. 5: aus einer Kombination aus Weichenmodul und Metalldetektormodul bestehende Vorrichtung mit einem Einfülltrichter,
- Fig. 6: aus einer Kombination aus Weichenmodul, Metalldetektormodul und Absperrmodul bestehende Vorrichtung,
- Fig. 7: aus einer Kombination aus Weichenmodul, Metalldetektormodul und zwei Absperrmodulen bestehende Vorrichtung.

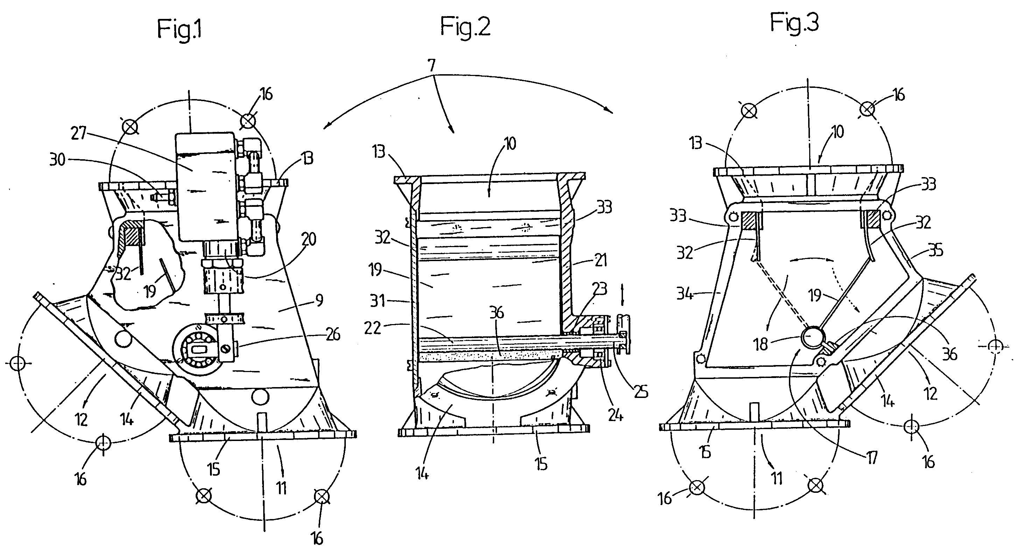

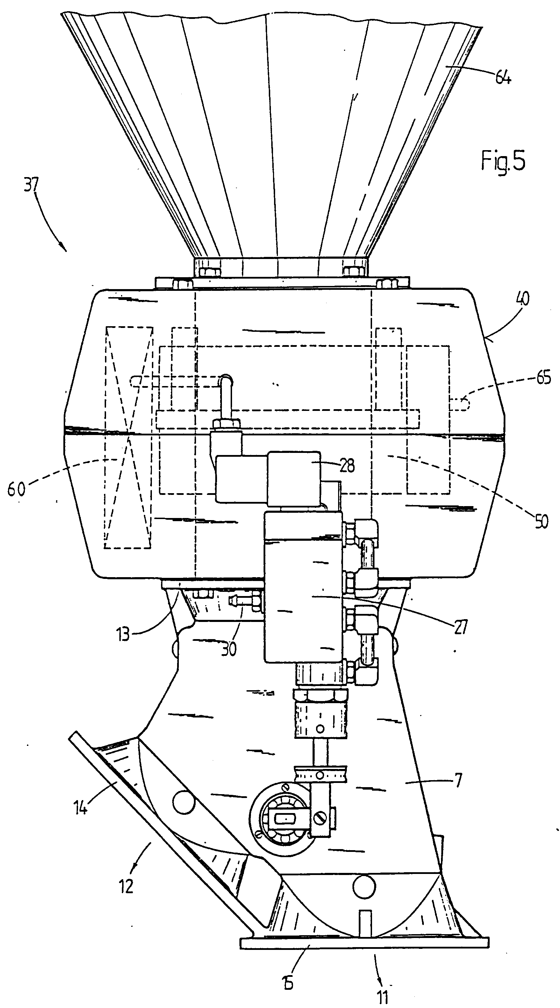

In den Figuren 1 bis 3 ist das Weichenmodul 7 dargestellt. Es besteht aus dem Gehäuse 9, vorzugsweise einem Aluminium-Gehäuse mit einer Eingangsöffnung 10 und zwei der Eingangsöffnung 10 gegenüberliegenden Ausgangsöffnungen 11,12, die im wesentlichen hosenbeinartig angeordnet sind. Von den beiden Ausgangsöffnungen 11,12 ist die Öffnung 11 als Gutseite und die Öffnung 12 als Schlechtseite bezeichnet, d.h. das durch die Eingangsöffnung 10 in das Weichenmodul 7 einströmende Fördergut, z.B. Kunststoff-Granulat, Mehl, Zucker und dgl., verläßt das Weichenmodul durch die Gutseite, wenn keine Metallteilchen darin enthalten sind, und es verläßt das Weichenmodul durch die Schlechtseite, wenn es mit einem Metallteilchen verunreinigt ist, auf jeden Fall solange, bis das Metallteilchen ausgeschieden ist. Jede Öffnung 10,11,12 besitzt einen Befestigungsflansch 13,14,15 mit Befestigungslöchern 16, im Ausführungsbeispiel jeweils vier Befestigungslöcher 16. Wie aus den Figuren 1 und 3 hervorgeht, bilden die beiden Ausgangsöffnungen 11,12 einen unsymmetrischen Zwickel 17, in dem die Welle 18 der Umlenkklappe 19 angeordnet ist, wie am besten aus Figur 3 der Zeichnung hervorgeht. Die Welle 18 ist einseitig an der dem Betätigungsmechanismus 20 zugewandten Gehäuseseite 21 der Weiche gelagert und als Träger auf zwei Stützen mit einem Tragarm 22 ausgebildet, an dem die aus Blech bestehende rechteckige Umlenkklappe 19 befestigt ist. Das zum Gehäuseinnern weisende Lager ist als Gleitlager 23 und das an der Gehäuseaußenseite 21 liegende Lager ist als Kugellager 24 ausgebildet. An dem überstehenden Wellenzapfen 25 greift über einen Hebel 26 der Betätigungsmechanismus 20 an, der die Umlenkklappe 19 betätigt, d.h. sie von einer die Schlechtseite 12 der Vorrichtung verschließende Lage in die die Gutseite 11 verschließende Lage dreht und umgekehrt. Als Betätigungsmechanismus 20 dient ein Pneumatikzylinder oder Elektromagnet, der mitsamt seiner Steuereinheit 27 außen am Gehäuse 9 befestigt und über eine in den Figuren 5, 6 und 7 mit 28 bezeichnete elektrische Steckverbindung mit der im Innern des Metalldetektormoduls 40 befindlichen Schaltungsanordnung 60 zur Steuerung der Vorrichtung verbunden ist. Der pneumatische Anschluß erfolgt an dem Anschlußnippel 30 des Steuerventils 27 des Betätigungsmechanismus 20.

In der ersten Lage der Umlenkklappe (Figur 3) befindet sich im Betrieb kein Metall im Fördergut und in der zweiten Lage (gestrichelt dargestellt) wird durch Metall verunreinigtes Fördergut ausgeschieden. Die Klappe wird durch den Betätigungsmechanismus 20 in die erste Lage zurückgedreht, sobald das Metallteil ausgeschieden ist.

Figur 3 gestattet eine Innenansicht des Weichenmoduls 7 bei abgenommenem Deckel 31. Es ist erkennbar, daß die Umlenkklappe 19 in Richtung der Eingangsöffnung 10 der Vorrichtung angeordnet ist und in jeder Endlage mit dem freien Ende an einer frei in das Gehäuse 9 hineinhängenden gummielastischen Schürze 32 anschlägt. Es sind insgesamt zwei Schürzen vorhanden, die an den Wandungen mit Hilfe von Leisten 33 hinter Rücksprüngen des Gehäuses 9 befestigt sind. Die Schürzen bestehen aus einem weichen elastischen Material wie Weichgummi, Naturkautschuk oder Kunststoff, beispielsweise Nitril-Butadien-Rubber (NBR), und sind im Abstand von den Wandungen 34,35 des Gehäuses 9 angeordnet, so daß die Schürzen 32 sich der Lage der Umlenkklappe 19 anpassen können.

Auf diese Weise wird in jeder Endlage der Klappe ein staubdichter Verschluß der jeweiligen Öffnung 11, 12 erreicht, wobei von der Klappe eingeklemmte körnige oder stückige Fördergutteilchen nicht mehr ein vollständiges Schließen der Klappe verhindern, was sonst zu Störungen in der Funktion der Klappe geführt hat. Der Spalt zwischen der Klappe und den Gehäusewänden kann durch eine Teflon-Dichtung verschlossen werden.

Der Bereich zwischen der Trennebene der beiden Öffnungen 11,12 und der Welle 18 wird durch eine Dichtleiste 36 abgedichtet, die in einer nicht näher bezeichneten Nut gelagert ist.

Die den Wellenlagern 23,24 gegenüberliegende Gehäusewand 28 der Weiche ist durch den mit Schrauben befestigten lösbaren Deckel 31 oder eine Klappe verschlossen. Bei geöffnetem Deckel dient diese Öffnung als Montage- oder Inspektionsöffnung.

Das Metalldetektormodul 40 weist ein kastenförmiges Gehäuse 41 mit zwei gleichen Gehäusehälften 42,43 auf und ist aus Metall, vorzugsweise Aluminium, hergestellt. Das Gehäuse 41 hat eine Eingangsöffnung 44 und eine Ausgangsöffnung 45. Um die Eingangsöffnung 44 und die Ausgangsöffnung 45 herum ist das Gehäuse als Befestigungsflansch 46,47 mit vier Gewindelöchern 48 ausgebildet. Mit den Flanschen 46,47 ist das Metalldetektormodul 40 an das Weichenmodul 7 oder das Absperrmodul 49 anschließbar, wie nachfolgend noch näher beschrieben wird.

Im Innern des Gehäuses 41 befindet sich ein ringförmiger, induktiv wirkender Metalldetektor 50 mit integrierter Schaltungselektronik im Teil 54, der mit seiner nicht dargestellten Durchgangsöffnung fluchtend zu den Gehäuseöffnungen 44, 45 angeordnet und an einem Befestigungsflansch 51 mit Hilfe von Schrauben 52 und Muttern 53 an der oberen Gehäusehälfte 42 befestigt ist. Mit Distanzstücken 55 ist der Metalldetektor 50 etwa in der Mitte des Gehäuses 41 justiert. In das Gehäuse 41 ist ein Leitrohr 57 aus Kunststoff eingesetzt, das von der Eingangsöffnung 44 bis zur Ausgangsöffnung 45 reicht und die Ringöffnung des Metalldetektors 50 durchdringt. Durch das Leitrohr 57 wird das zu untersuchende Fördergut hindurchgeleitet und mit dem Metalldetektor 50 nach Metallteilchen untersucht. Das Leitrohr 57 schließt bündig mit dem Befestigungsflansch 46,47 ab und besitzt an jedem Ende einen nicht näher bezeichneten Absatz. Mit den Absätzen greift das Leitrohr 57 jeweils in einen bündig in den Flansch 46,47 eingelassenen Befestigungsring 58 ein, der Befestigungslöcher 59 zur Verbindung mit dem Gehäuse 41 aufweist. Sowohl der Metalldetektor 50, als auch das Leitrohr 57 können ausgewechselt werden gegen andere Metalldetektoren und Leitrohre mit verschiedenen Durchlaßquerschnitten.

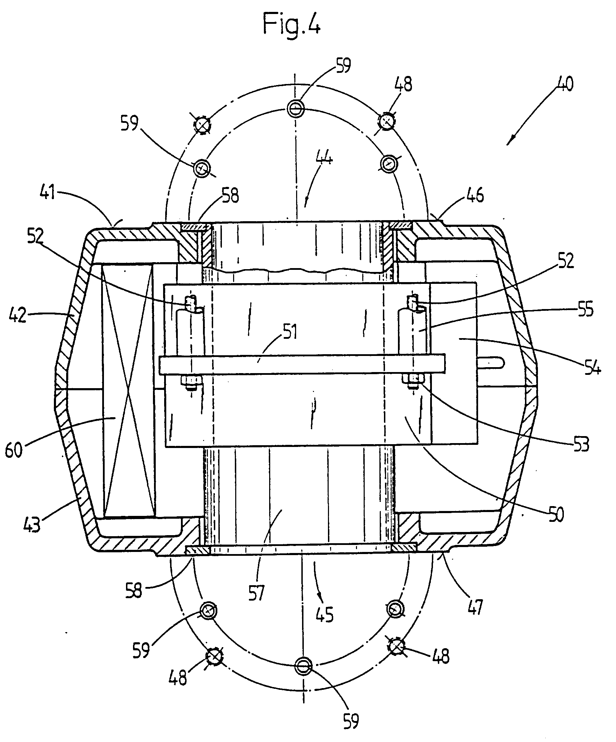

In Figur 4 im linken Gehäuseteil befindet sich ein Raum für die Schaltungsanordnung 60 der Vorrichtung 37,38,39. Auf die einzelnen Funktionen dieser Steuerungselektronik wird nachfolgend noch eingegangen.

Bei dem Absperrmodul 49,49' handelt es sich um einen aus dünnem Blech bestehenden Schieber 76 mit einem Gehäuse. Auf eine nähere Beschreibung des Schiebers wird daher verzichtet. Der Schieber ist an eine pneumatische Kolben-Zylinder-Einheit 61 (Pneumatikzylinder) angeschlossen und wird durch das Steuerventil 62 gesteuert. Der pneumatische Anschluß erfolgt an den Anschlußnippel 63. Es sei bemerkt, daß der Betätigungsmechanismus (Pneumatikzylinder 61) und die Steuerung des Pneumatikzylinders (Steuerventil 62) den gleichen Aufbau haben können wie bei dem Weichenmodul 7. Ferner kann über eine elektrische Steckvorrichtung eine Verbindung zwischen dem Steuerventil 62 und der im Metalldetektormodul 40 befindlichen Schaltungsanordnung 60 hergestellt werden. Das Absperrmodul 49 besitzt zu den Befestigungsflanschen 13,47 passende Befestigungsflansche 78 mit nicht dargestellten Befestigungslöchern für die Verbindung mit dem Metalldetektormodul 40 oder dem Weichenmodul 7. Anstelle eines Flachschiebers als Absperrmodul 49,49' kann auch ein anderes Absperrorgan, beispielsweise ein pneumatisch betätigtes Quetschventil, benutzt werden.

Die in Figur 5 dargestellte Vorrichtung 37 zum Ausscheiden von Metallteilchen ist aus dem Weichenmodul 7 und dem in Förderrichtung vor dem Weichenmodul angeordneten Metalldetektormodul 40 zusammengesetzt, an dem ein Einfülltrichter 64 angeschlossen ist. Über die Steckverbindung 28 ist der Betätigungsmechanismus 20 (Pneumatikzylinder) mit der im Metalldetektormodul 40 befindlichen Schaltungsanordnung 60 verbunden, die über eine Leitung 65 an den Ausgang des Metalldetektors 50 angeschlossen ist. Der Metalldetektor 50 erkennt das Passieren eines Metallteils beim Durchgang durch die Ringöffnung und erzeugt ein Ausgangssignal, das über die Leitung 65 die Schaltungsanordnung 60 ansteuert. Die Schaltungsanordnung 60 erzeugt ein Steuersignal, das über die Steckverbindung 28 den elektrischen Teil des pneumatischen Steuerteils 27 betätigt. Der Betätigungsmechanismus 20 schwenkt die Umlenkklappe 19 aus der die Schlechtseite 12 verschließenden Endlage in die andere, die Gutseite 11 verschließenden Endlage. Wenn das Metallteil ausgeschieden ist, steuert die Schaltungsanordnung 60 die Umlenkklappe wieder zurück in die Ausgangslage.

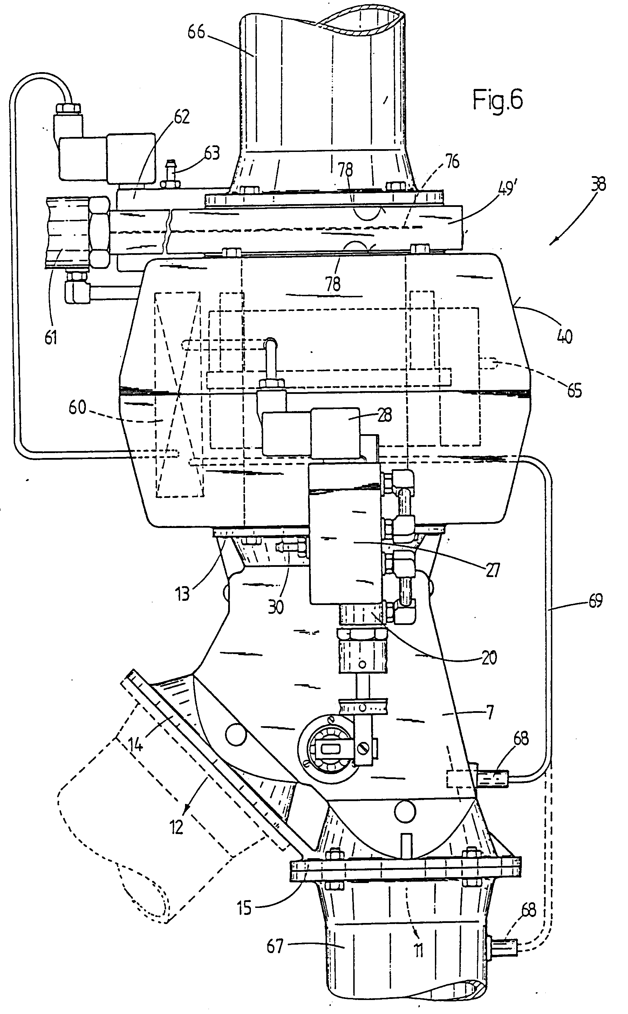

Bei der in Figur 6 dargestellten Vorrichtung 38 ist in Förderrichtung vor dem Metalldetektormodul 40 das Absperrmodul 49' angeflanscht. Über eine nicht näher bezeichnete Steuerleitung mit einer ebenfalls nicht näher bezeichneten Steckvorrichtung ist das Steuerventil 62 mit der Schaltungsanordnung 60 im Metalldetektormodul 40 verbunden. Anstelle eines Einfülltrichters ist die Vorrichtung 38 an eine Förderleitung 66 angeschlossen. Der untere Stutzen 67 soll den Maschinenstutzen einer Preß-Spritzgießmaschine oder das Gegenstück der Förderleitung 66 oder den Anschlußstutzen eines Auffang-Behälters darstellen, der das Fördergut zwischenspeichert. Mit dem Absperrmodul 49' kann der Materialstrom in Abhängigkeit von der Materialentnahme aus dem Stutzen 67 unterbrochen werden, so daß ein Rückstau bis in das Weichenmodul 7 verhindert wird. Für diesen Zweck befindet sich an der Ausgangsöffnung 11 des Weichenmoduls bzw. direkt am Stutzen 67 ein Fühler 68, beispielsweise ein kapazitiv wirkender Geber, der über die Leitung 69 mit der Schaltungsanordnung 60 im Metalldetektormodul 40 verbunden ist. Erreicht der Füllstand im Stutzen 67 bzw. in der Ausgangsöffnung 11 die Fühlermarke, erzeugt der Fühler ein Steuersignal, das durch die Schaltungsanordnung 60 das Steuerventil 62 ansteuert und den Pneumatikzylinder 61 betätigt. Dadurch wird der Fördergutstrom durch den Schieber 76 solange unterbrochen, bis das Niveau im Stutzen 67 wieder abgefallen ist.

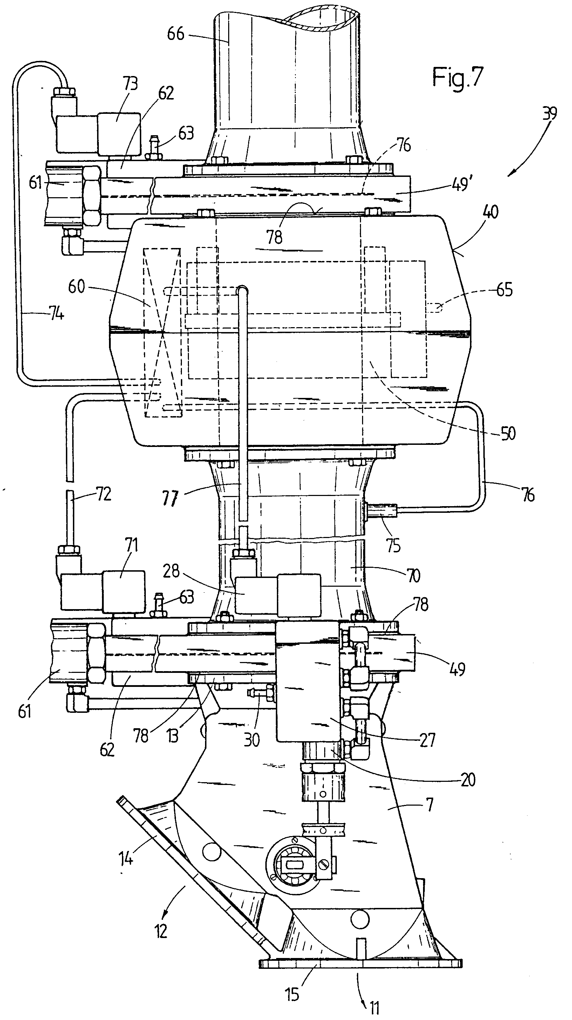

Die in Figur 7 dargestellte vorrichtung 39 besteht aus dem Weichenmodul 7, einem an die Eingangsöffnung 10 des Weichenmoduls 7 angeschlossenen Absperrmodul 49, einem zwischen dem ersten Absperrmodul 49 und dem Metalldetektormodul 40 angeordneten Sammel-Stutzen 70 und einem in Förderrichtung vor dem Metalldetektormodul 40 am Befestigungsflansch 47 angeschlossenen weiteren Absperrmodul 49'. Mit dieser Vorrichtung 39 kann das Fördergut "portionsweise" untersucht werden bei entsprechender Steuerung der Absperrmodule 49,49'. Für diesen Zweck ist das zweite Absperrmodul 49 über die Steckvorrichtung 71 und die Leitung 72 mit der Schaltungsanordnung 60 im Metalldetektormodul 40 verbunden wie auch das erste Absperrmodul 49' über die Steckvorrichtung 73 und die Leitung 74. Ferner greift in den Sammel-Stutzen 70 ein Fühler 75, vorzugsweise ein kapazitiv wirkender Geber, ein, der über die Leitung 76 an die Schaltungsanordnung 60 angeschlossen ist. Die Schaltungsanordnung steuert beide Absperrmodule 49,49' in Abhängigkeit vom Füllstand im Sammel-Stutzen 70, der durch den Fühler 75 überwacht wird. Die Schaltungsanordnung steuert ferner das Weichenmodul 7 in Abhängigkeit der vom Metalldetektormodul 40 erkannten Metallteilchen im Fördergut.

Die Wirkungsweise der Vorrichtung 39 nach Figur 7 ist wie folgt: Zunächst sind beide Absperrmodule 49,49' geschlossen und im Sammel-Stutzen befindet sich kein Fördergut oder das Fördergut erreicht nicht die Steuermarke des Fühlers 75. Dann wird das erste Absperrmodul 49' durch die Schaltungsanordnung 60 geöffnet. Der Sammel-Stutzen 70 wird bis zur Fühlermarke des Fühlers 75 gefüllt. Das Fühler-Ausgangssignal steuert die Schaltungsanordnung an, die einen Steuerbefehl zum Schließen des ersten Absperrmoduls 49' an das Steuerventil 62 abgibt. Hat das Metalldetektormodul 40 beim Durchlauf des Fördergutes ein Metallteilchen erkannt, wird durch ein entsprechendes Ausgangssignal des Metalldetektormoduls 40 die Schaltungsanordnung angesteuert, die über die Leitung 77 das Steuerventil 27 des Betätigungsmechanismus 20 (Pneumatikzylinder) des Weichenmoduls 7 ansteuert, wodurch die Umlenkklappe 19 die Gutseite 11 des Weichenmoduls 7 schließt und die Schlechtseite 12 öffnet. Nachdem die Umlenkklappe 19 entsprechend betätigt wurde, wird das zweite Absperrmodul 49 durch die Schaltungsanordnung angesteuert und geöffnet. Der Inhalt des Sammel-Stutzens 70 wird durch das Weichenmodul 7 durch die Ausgangsöffnung 12 (Schlechtseite) ausgeschieden. Enthält das Fördergut im Sammel-Stutzen 70 kein Metall, wird sein Inhalt durch die Ausgangsöffnung 11 (Gutseite) des Weichenmoduls 7 weitergefördert. Danach wird das zweite Absperrmodul 49 wieder geschlossen. Damit möglichst wenig Fördergut durch die Ausgangsöffnung 12 (Schlechtseite) ausgeschieden wird, kann das erste Absperrmodul 49' durch das Metalldetektormodul 40 über die Schaltungsanordnung 60 bereits dann geschlossen werden, wenn der Metalldetektor 50 ein Metallteilchen im Fördergut erkannt hat.

## Patentansprüche

1. Vorrichtung zum Ausscheiden von Metallteilchen aus einem Fördergutstrom, der aus pulverförmigem, körnigem oder stückigem Fördergut besteht, mit einer Weiche, die ein bewegbares Umlenkorgan (19) aufweist und als selbständiges Weichenmodul (7) mit einem Weichengehäuse (9) mit einer Eingangsöffnung (10) und mindestens zwei Ausgangsöffnungen (11,12) ausgebildet ist, und einem Metalldetektor (50), der das Passieren eines Metallteils erkennt und in Abhängigkeit davon das Umlenkorgan (19) der Weiche steuert, wobei der Metalldetektor (50) als selbständiges Metalldetektormodul (40) mit eigenem Detektorgehäuse (41) mit einer Eingangsöffnung (44) und einer Ausgangsöffnung (45) ausgebildet ist,
**dadurch gekennzeichnet,**
daß die Eingangs- und Ausgangsöffnungen (10,11,12; 44,45) des Weichengehäuses (9) und des Detektorgehäuses (41) einheitlich zueinander passende Anschlußverbindungen (13,14,15;44,47) aufweisen, mit denen diese Gehäuse in wählbarer Reihenfolge zu Vorrichtungen (37;38;39) unterschiedlicher Bauart und Funktionsweise zusammensetzbar sind.

2. Vorrichtung nach Anspruch 1, dadurch gekennzeichnet, daß ein selbständiges Absperrmodul (49;49') mit eigenem Absperrgehäuse vorgesehen ist, dessen Eingangs- und Ausgangsöffnungen mit zu den Anschlußverbindungen (13,14,15;46,47) des Weichenmoduls (7) und des Metalldetektormoduls (40) passenden Anschlußverbindungen (78) versehen sind.

3. Vorrichtung nach Anspruch 2, dadurch gekennzeichnet, daß in Förderrichtung vor dem Metalldetektormodul (40) ein Absperrmodul (49') angeordnet ist.

4. Vorrichtung nach Anspruch 2 bis 3, dadurch gekennzeichnet, daß zwischen dem Weichenmodul (7) und dem Metalldetektormodul (40) ein Absperrmodul (49) angeordnet ist.

5. Vorrichtung nach einem der Ansprüche 2 bis 4, dadurch gekennzeichnet, daß zwischen dem Absperrmodul (49) und dem Metalldetektormodul (40) ein Sammel-Stutzen (70) angeordnet ist.

6. Vorrichtung nach einem der Ansprüche 1 bis 5, dadurch gekennzeichnet, daß im Bereich der Ausgangsöffnung (11) des Weichenmoduls (7) bzw. am Sammel-Stutzen (70) ein Fühler (68,75) zur Füllstandsanzeige angeordnet ist.

7. Vorrichtung nach einem der Ansprüche 1 bis 6, dadurch gekennzeichnet, daß das Metalldetektormodul (40) ein zweiteiliges kastenartiges Detektorgehäuse (41) mit einer Eingangsöffnung (44) und einer mit der Eingangsöffnung fluchtenden Ausgangsöffnung (45) für das Fördergut aufweist und der Randbereich der Ein- und Ausgangsöffnung (44,45) als Anschlußflansch (47) mit Befestigungslöchern (48) ausgebildet ist, daß im Detektorgehäuse (41) ein Metalldetektor (50) mit einer Durchgangsöffnung angeordnet ist, die fluchtend zu den Ein-/Ausgangsöffnungen (44,45) angeordnet ist.

8. Vorrichtung nach Anspruch 7, dadurch gekennzeichnet, daß in das Detektorgehäuse (41) ein Leitrohr (57) aus Kunststoff eingesetzt ist, das von der Eingangsöffnung (44) bis zur Ausgangsöffnung (45) reicht und die Durchgangsöffnung des Metalldetektors (50) durchdringt.

9. Vorrichtung nach Anspruch 8, dadurch gekennzeichnet, daß das Leitrohr (57) an jedem Ende mit einem Absatz in einem in das Detektorgehäuse (41) eingesetzten Befestigungsring (58) zentriert ist.

10. Vorrichtung nach Anspruch 8 oder 9, dadurch gekennzeichnet, daß das Leitrohr (57) auswechselbar ist.

11. Vorrichtung nach einem der Ansprüche 1 bis 10, dadurch gekennzeichnet, daß in dem Detektorgehäuse (41) eine vom Metalldetektor (50) und/oder dem Fühler (68,75) gesteuerte Schaltungsanordnung zur Steuerung des Weichenmoduls (7) und/oder des Absperrmoduls (49,49') angeordnet ist.

12. Vorrichtung nach einem der Ansprüche 6 bis 11, dadurch gekennzeichnet, daß eine im Detektorgehäuse (41) enthaltene Schaltungsanordnung (60) den Betätigungsmechanismus (61,62) des Absperrmoduls (49') ansteuert, der das Absperrmodul (49') schließt, wenn der Füllstand die Fühlermarke des Fühlers (68) erreicht hat.

13. Vorrichtung nach einem der Ansprüche 2 bis 11, dadurch gekennzeichnet, daß ein erstes Absperrmodul (49') vor und ein zweites Absperrmodul (49) hinter dem Metalldetektormodul angeordnet ist, und daß Mittel vorgesehen sind zum Bewirken, daß das erste Absperrmodul (49') nur dann geöffnet ist, wenn das zweite Absperrmodul (49) geschlossen ist, und daß das zweite Absperrmodul (49) geöffnet ist, wenn das erste geschlossen ist.

14. Vorrichtung nach den Ansprüchen 5, 6 und 13, dadurch gekennzeichnet, daß Mittel vorgesehen sind zum Bewirken, daß das erste Absperrmodul (49') geschlossen wird, wenn das Fördergut im Sammel-Stutzen (70) die Fühlermarke des Fühlers (75) erreicht hat und daß das zweite Absperrmodul (49) geöffnet wird, wenn das Weichenmodul (7) durch den Metalldetektor (50) in Abhängigkeit vom Vorhandensein eines Metallteils im Sammel-Stutzen (70) auf eine der beiden Ausgangsöffnungen (11), (12) eingestellt ist.

15. Vorrichtung nach Anspruch 14, dadurch gekennzeichnet, daß Mittel vorgesehen sind zum Bewirken, daß das erste Absperrmodul (49') geschlossen wird, wenn ein Metallteilchen den Metalldetektor (50) passiert, und das zweite Absperrmodul (49) geöffnet wird, wenn die Schlechtseite (12) des Weichenmoduls (7) geöffnet und die Gutseite (11) geschlossen ist.

16. Vorrichtung nach einem der Ansprüche 1 bis 15, dadurch gekennzeichnet, daß eine das Ausscheideorgan (19) des Weichenmoduls (7) tragende drehbare Welle (18) einseitig an der dem Betätigungsmechanismus zugewandten Seite des Weichengehäuses (9) gelagert und mit ihrem freien Ende nicht abgestützt in das Weichengehäuse (9) ragt.

17. Vorrichtung nach einem der Ansprüche 1 bis 16, dadurch gekennzeichnet, daß im Bereich von gegenüberliegenden Seitenwandungen (34,35) der Eingangsöffnung (10) des Weichengehäuses (9) in das Weichengehäuse (9) hineinragende gummielastische Schürzen (32) angeordnet sind, gegen die das Umlenkorgan (19) in seinen Endlagen drückt.

18. Vorrichtung nach Anspruch 17, dadurch gekennzeichnet, daß die Schürzen (32) im Abstand von den Seitenwandungen (34,35) des Weichengehäuses angeordnet sind.

19. Vorrichtung nach Anspruch 17 oder 18, dadurch gekennzeichnet, daß die Schürzen (32) aus Weichgummi, Naturkautschuk oder einem weichelastischen Kunststoff, wie Nitril-Butadien-Rubber (NBR) bestehen.

20. Baukastensystem zum Zusammensetzen einer Vorrichtung zum Ausscheiden von Metallteilchen aus einem Fördergutstrom, der aus pulverförmigem, körnigem oder stückigem Fördergut besteht, mit mehreren Modulen, die wählbar miteinander verbindbar sind, wobei die Module ein Weichenmodul (7) mit eigenem Weichengehäuse (9), ein Metalldetektormodul (40) mit eigenem Detektorgehäuse (41) und ein Absperrmodul (49,49') mit eigenem Absperrgehäuse umfassen und jedes der Module mit mindestens einer Eingangsöffnung und mindestens einer Ausgangsöffnung versehen ist, welche Eingangs- und Ausgangsöffnungen einheitlich zueinander passende Anschlußverbindungen (13,14,15; 46,47) aufweisen, mit denen die Gehäuse (9;41) in wählbarer Reihenfolge zu Vorrichtungen (37;38;39) unterschiedlicher Bauart und Funktionsweise zusammensetzbar sind.

## Claims

1. A device for separating metal particles from a flow of material consisting of pulverized, granular or lumpy material, comprising a selector having a movable selecting member (19), said selector being comprised in a self-contained selector module (7) having a selector housing (9) with an inlet aperture (10) and at least two outlet apertures (11,12), and a metal detector (50) for detecting the passage of a metal particle and, depending on this, controlling said selecting member (19) of said selector, said metal detector (50) being comprised in a self-contained metal detector module (40) with a detector housing (41) with an inlet aperture (44) and an outlet aperture (45),
**characterized in that**
said inlet and outlet apertures (10,11,12;44,45) of said selector housing (9) and said detector housing (41) have uniformly mutually matching connection means (13,14,15;44,47), by which said housings can be assembled in optional sequence to form devices (37;38;39) of different structure and operation.

2. The device of claim 1, characterized in that a self-contained closing module (49;49') having an own closing housing is provided, the inlet and outlet apertures of which are provided with connection means (78) matching with said connection means (13,14,15;46,47) of said selector module (7) and said metal detector module (40).

3. The device of claim 2, characterized in that a closing module (49') is arranged upstream of said metal detector module (40) in the direction of transport.

4. The device of one of claims 2 to 3, characterized in that a closing module (49) is arranged between said selector module (7) and said metal detector module (40).

5. The device of one of claims 2 to 4, characterized in that a collection member (70) is arranged between said closing module (49) and said metal detector module (40).

6. The device of one of claims 1 to 5, characterized in that a sensor (68,75) is arranged in the region of said outlet aperture (11) of said selector module (7), or at said collection member (70), for displaying the filling level.

7. The device of one of claims 1 to 6, characterized in that said metal detector module (40) comprises a two-part box-like detector housing (41) with an inlet aperture (44) and an outlet aperture (45) for the material to be conveyed, which is in alignment with said inlet aperture, the edge portion of said inlet and outlet apertures (44,45) being configured as a connection flange (47) with mounting holes (48), and that a metal detector (50) with a passage being arranged in alignment with the inlet/outlet apertures (44,45) is arranged in said detector housing (41).

8. The device of claim 7, characterized in that a plastic guide pipe (57) is placed in said detector housing (41), said guide pipe extending from said inlet aperture (44) to said outlet aperture (45) and penetrating through said passage of said metal detector (50).

9. The device of claim 8, characterized in that said guide pipe (57) is centered at each end with one shoulder in a mounting ring (58) placed in said detector housing (41).

10. The device of claim 8 or 9, characterized in that said guide pipe (57) is exchangeably mounted.

11. The device of one of claims 1 to 10, characterized in that a circuit arrangement for controlling said selector module (7) and/or said closing module (49,49'), which circuit arrangement is controlled by said metal detector (50) and/or said sensor (68,75), is arranged in said detector housing (41).

12. The device of one of claims 6 to 11, characterized in that a circuit arrangement (60) contained in said detector housing (41) activates said actuating mechanism (61,62) of said closing module (49'), which actuating mechanism closes said closing module (49') when the level has reached the sensing mark of said sensor (68).

13. The device of one of claims 2 to 11, characterized in that a first closing module (49') is arranged upstream of and a second closing module (49) downstream of said metal detector, and that said first closing module (49') is only open when said second closing module (49) is closed, and said second closing module (49) is closed when said first one is open.

14. The device of claims 5, 6 and 13, characterized in that means are provided for causing said first closing module (49') to be closed when the material in said collection member (70) has reached the sensing mark of said sensor (75), and for causing said second closing module (49) to be opened when said selector module (7) is adjusted by said metal detector (50), depending on the presence of a metal particle in said collection member (70), to one of said two outlet apertures (11),(12).

15. The device of claim 14, characterized in that means are provided for causing said first closing module (49') to be closed when a metal particle passes said metal detector (50), and for causing said second closing module (49) to be opened when the bad side (12) of said selector module (7) is open and the good side (11) is closed.

16. The device of one of claims 1 to 15, characterized in that a rotatable shaft (18) which supports the selecting member (19) of said selector module (7) is unilaterally supported at the side of said selector housing (9) which faces an actuating mechanism, while its free end protrudes into said selector housing (9) without being supported.

17. The device of one of claims 1 to 16, characterized in that rubber-resilient skirts (32) protruding into said selector housing (9) are arranged in the region of opposite side walls (34,35) of said inlet aperture (10) of said selector housing (9), said selecting member (19) pressing against said skirts when in its end positions.

18. The device of claim 17, characterized in that said skirts (32) are arranged in spaced relationship with said side walls (34,35) of said selector housing.

19. The device of claim 17 or 18, characterized in that said skirts (32) are made of soft rubber, natural rubber or a soil elastic plastic material, such as nitril-butadien-rubber (NBR).

20. A modular system for assembling a device for separating metal particles from a flow of material consisting of pulverized, granular or lumpy material to be conveyed, comprising several modules which can be optionally combined, the modules comprising a selector module (7) having an own selector housing (9), a metal detector module (40) having an own detector housing (41), and a closing module (49,49') having an own closing housing, each of said housings being provided with at least one inlet aperture and at least one outlet aperture, which inlet and outlet apertures comprise uniformly mutually matching connection members (13,14,15;46,47), by which said housings (9;41) can be assembled, in optional sequence, to form metal separators of different construction and operation.

## Revendications

1. Dispositif de séparation de particules métalliques à partir d'un courant de matières transportées, qui est constitué de matières en poudre, en grains ou en morceaux, comportant un dispositif d'aiguillage qui présente un organe mobile de déviation (19) et qui est réalisé, en tant que module d'aiguillage (7) indépendant, avec un carter de dispositif d'aiguillage (9) comprenant une ouverture d'entrée (10) et au moins deux ouvertures de sortie (11, 12), et un détecteur de métaux (50), qui détecte le passage d'un élément métallique et qui commande, en fonction de cette détection, l'organe de déviation (19) du dispositif d'aiguillage, le détecteur de métaux (50) étant réalisé en tant que module détecteur de métaux (40) indépendant avec son propre carter de détecteur (41) comportant une ouverture d'entrée (44) et une ouverture de sortie (45),
caractérisé en ce que
les ouvertures d'entrée et de sortie (10, 11, 12 ; 44, 45) du carter de dispositif d'aiguillage (9) et du carter de détecteur (41) présentent des raccords de connexion (13, 14, 15 ; 44, 47) adaptés les uns aux autres de manière uniforme, à l'aide desquels ces carters peuvent être assemblés, selon un Ordre au choix, pour constituer des dispositifs (37 ; 38 ; 39) de conception et de mode de fonctionnement différents.

2. Dispositif selon la revendication 1, caractérisé en ce qu'il est prévu en module d'arrêt (49 ; 49') indépendant avec son propre carter d'arrêt, dont les ouvertures d'entrée et de sortie sont pourvues de raccords de connexion (78) adaptés aux raccords de connexion (13, 14, 15 ; 46, 47) du module d'aiguillage (7) et du module détecteur de métaux (40).

3. Dispositif selon la revendication 2, caractérisé en ce qu'un module d'arrêt (49') est disposé avant le module détecteur de métaux (40) dans le sens de transport.

4. Dispositif selon l'une des revendications 2 et 3, caractérisé en ce qu'un module d'arrêt (49) est disposé entre le module d'aiguillage (7) et le module détecteur de métaux (40).

5. Dispositif selon l'une des revendications 2 à 4, caractérisé en ce qu'un conduit collecteur (70) est disposé entre le module d'arrêt (49) et le module détecteur de métaux (40).

6. Dispositif selon l'une des revendications 1 à 5, caractérisé en ce qu'un palpeur (68, 75), servant à indiquer le niveau, est disposé dans la zone de l'ouverture de sortie (11) du module d'aiguillage (7) ou bien au niveau du conduit collecteur (70).

7. Dispositif selon l'une des revendications 1 à 6, caractérisé en ce que le module détecteur de métaux (40) présente un carter de détecteur (41) du type caisson en deux parties, avec une ouverture d'entrée (44) et une ouverture de sortie (45) en alignement avec l'ouverture d'entrée, pour les matières transportées, la zone de bord des ouvertures d'entrée et de sortie (44, 45) étant réalisée sous forme de rebord de raccordement (47) avec des trous de fixation (48), en ce que, dans le carter de détecteur (41), est disposé un détecteur de métaux (50) ayant une ouverture de passage, qui est disposée en alignement avec les ouvertures d'entrée/de sortie (44, 45).

8. Dispositif selon la revendication 7, caractérisé en ce qu'un tuyau de guidage (57) en matière plastique est inséré dans le carter de détecteur (41), en ce qu'il s'étend depuis l'ouverture d'entrée (44) jusqu'à l'ouverture de sortie (45) et traverse l'ouverture de passage du détecteur de métaux (50).

9. Dispositif selon la revendication 8, caractérisé en ce que le tuyau de guidage (57) est centré, à chaque extrémité, par un gradin, dans un anneau de fixation (58) inséré dans le carter de détecteur (41).

10. Dispositif selon l'une des revendications 8 ou 9, caractérisé en ce que le tuyau de guidage (57) est amovible.

11. Dispositif selon l'une des revendications 1 à 10, caractérisé en ce que, dans le carter de détecteur (41), est disposé un circuit, commandé par le détecteur de métaux (50) et/ou par le palpeur (68, 75), pour la commande du module d'aiguillage (7) et/ou du module d'arrêt (49, 49').

12. Dispositif selon l'une des revendications 6 à 11, caractérisé en ce qu'un circuit (60), contenu dans le carter de détecteur (41), actionne le mécanisme d'actionnement (61, 62) du module d'arrêt (49'), qui ferme le module d'arrêt (49') lorsque le niveau a atteint le repère du palpeur (68).

13. Dispositif selon l'une des revendications 2 à 11, caractérisé en ce qu'un premier module d'arrêt (49') est disposé avant et un deuxième module d'arrêt (49) est disposé derrière le module détecteur de métaux, et en ce que des moyens sont prévus pour assurer que le premier module d'arrêt (49') ne soit ouvert que lorsque le deuxième module d'arrêt (49) est fermé, et que le deuxième module d'arrêt (49) ne soit ouvert que lorsque le premier est fermé.

14. Dispositif selon les revendications 5, 6 et 13, caractérisé en ce que des moyens sont prévus pour assurer que le premier module d'arrêt (49') soit fermé lorsque les matières transportées, présentes dans le conduit collecteur (70), ont atteint le repère du palpeur (75), et que le deuxième module d'arrêt (49) soit ouvert lorsque le module d'aiguillage (7) est réglé, par le détecteur de métaux (50), en fonction de la présence d'un élément métallique dans le conduit collecteur (70), sur l'une des deux ouvertures de sortie (11), (12).

15. Dispositif selon la revendication 14, caractérisé en ce que des moyens sont prévus pour assurer que le premier module d'arrêt (49') soit fermé, lorsqu'un élément métallique passe dans le détecteur de métaux (50), et que le deuxième module d'arrêt (49) soit ouvert, lorsque le côté "mauvais" (12) du module d'aiguillage (7) est ouvert et que le côté "bon" (11) est fermé.

16. Dispositif selon l'une des revendications 1 à 15, caractérisé en ce qu'un arbre rotatif (18), portant l'organe de déviation (19) du module d'aiguillage (7) est monté, par un côté, sur le côté, dirigé vers le mécanisme d'actionnement, du carter de dispositif d'aiguillage (9) et fait saillie, par son extrémité libre, de manière non soutenue, dans le carter de dispositif d'aiguillage (9).

17. Dispositif selon l'une des revendications 1 à 16, caractérisé en ce que, dans la zone des parois latérales (34, 35) opposées de l'ouverture d'entrée (10) du carter de dispositif d'aiguillage (9), sont disposés des tabliers (32) en caoutchouc élastique, qui font saillie à l'intérieur du carter de dispositif d'aiguillage (9) et contre lesquels appuie l'organe de déviation (19) dans ses positions finales.

18. Dispositif selon la revendication 17, caractérisé en ce que les tabliers (32) sont disposés à une certaine distance des parois latérales (34, 35) du carter de dispositif d'aiguillage.

19. Dispositif selon l'une des revendications 17 ou 18, caractérisé en ce que les tabliers (32) consistent en du caoutchouc tendre, en du caoutchouc naturel ou en une matière synthétique, souple et élastique, telle que le caoutchouc nitrile butadiène (NBR).

20. Système d'unités de montage pour constituer un dispositif de séparation de particules métalliques à partir d'un courant de matières transportées, constitué de matières en poudre, en grains ou en morceaux, le système comportant plusieurs modules, qui peuvent être reliés au choix entre eux, les modules comprenant un module d'aiguillage (7) avec son propre carter de dispositif d'aiguillage (9), un module détecteur de métaux (40) avec son propre carter de détecteur (41) et un module d'arrêt (49, 49') avec son propre carter d'arrêt, et chacun des modules étant pourvu d'au moins une ouverture d'entrée et d'au moins une ouverture de sortie, lesquelles ouvertures d'entrée et de sortie présentent des raccords de connexion (13, 14, 15 ; 46, 47) adaptés les uns aux autres de manière uniforme, et à l'aide desquels les carters (9 ; 41) peuvent être assemblés, selon un ordre au choix, pour constituer des dispositifs (37 ; 38 ; 39) de conception et de mode de fonctionnement différents.
